# FASCICULE DE BREVET EUROPEEN

(11) **EP 0 965 138 B1**
(45) Date de publication et mention de la délivrance du brevet: **13.10.2004**
(21) Numéro de dépôt: 98958980.9
(22) Date de dépôt: 08.12.1998
(51) Int. Cl.: H01C 7/02, H01C 17/00, H05B 3/14, C08L 67/02, C08L 101/00

(54) **CABLES AUTO-REGULANTS EXTRUDES ET LEUR PROCEDE DE FABRICATION**
EXTRUDIERTE SELBSTREGULIERENDE KABEL UND IHRE HERSTELLUNG
SELF-ADJUSTING EXTRUDED CABLES AND METHOD FOR MAKING SAME

(30) Priorité: 08.12.1997 FR 9715501
(43) Date de publication de la demande: 22.12.1999
(73) Titulaire: ACOME, SOCIETE COOPERATIVE DE TRAVAILLEURS, F-75008 Paris (FR)
(72) Inventeur: LAGREVE, Christian, F-61700 Lonlay l'Abbaye (FR); BRAULT, Alain, F-50600 Parigny (FR); LUCAS, Laurent, F-50140 Saint Jean du Corail (FR)
(74) Mandataire: Boulinguiez, Didier
(86) Numéro de dépôt international: PCT/FR1998/002657
(87) Numéro de publication internationale: WO 1999/030334

(56) Documents cités:
- EP-A- 0 307 205
- DE-A- 2 755 076
- DE-A- 2 948 349
- US-A- 3 861 029
- DATABASE WPI Section Ch, Week 8902 Derwent Publications Ltd., London, GB; Class A17, AN 89-012750 XP002097294 & JP 63 289901 A (DAINICHISEIKA COLOR & CHEM MFG), 28 novembre 1988
- CHEMICAL ABSTRACTS, vol. 87, no. 4, 25 juillet 1977 Columbus, Ohio, US; abstract no. 24257, XP002075530 & JP 52 047843 A (ASAHI CHEMICAL IND. CO.) 16 avril 1977
- DATABASE WPI Section Ch, Week 7809 Derwent Publications Ltd., London, GB; Class A23, AN 78-16767A XP002097295 & JP 53 005795 A (TORAY IND INC) , 19 janvier 1978

## Description

L'invention porte sur des câbles auto-régulants de n'importe quelle structure dans lesquels le matériau ayant un comportement CTP, c'est-à-dire présentant un coefficient de température positif, est un alliage de polymères compatibles. L'invention porte également sur le procédé de fabrication de câbles auto-régulants dans lequel l'alliage à comportement CTP est mis en oeuvre par extrusion sans étape complémentaire de réticulation ou de traitement thermique autour de torons électriquement conducteurs.

Les câbles auto-régulants actuellement sur le marché sont de deux types : ou bien de type polyéthylène ou bien de type polymères fluorés tels que décrits dans le brevet EP 40 537.

Cependant, les câbles auto-régulants de type polyéthylène doivent être réticulés, ou bien, comme décrit dans le brevet US 3,861,029, ils doivent subir un traitement thermique supplémentaire du type recuit, ce qui augmente leur coût. Les câbles auto-régulants de type polymères fluorés présentent quant à eux l'inconvénient d'être fragiles et d'être d'un coût élevé.

Il existe donc un réel besoin pour des câbles auto-régulants, extrudables, économiques, présentant un excellent rapport de l'intensité de démarrage sur l'intensité de courant maximal et une excellente puissance linéique ainsi qu'une bonne stabilité au vieillissement.

La Société Déposante, après de nombreuses recherches, a eu le grand mérite de trouver un câble auto-régulant présentant l'ensemble de ces caractéristiques. Ce câble auto-régulant est caractérisé par le fait que le matériau à comportement CTP est un alliage de polymères compatibles comprenant, les pourcentages étant exprimés en poids par rapport au poids desdits polymères :
- de 20 à 50% d'au moins une polyoléfine polaire,
- de 50 à 80% d'au moins un polymère dit "de matrice" choisi dans le groupe comprenant les poly(alkylène en C₁-C₄)téréphtalates, les polyamides, les polycarbonates, les copolymères de polyester et de polyéther, les polycétones et les polyméthacrylates de méthyle,
- de 5 à 15%, de préférence de 5 à 10% de charges conductrices, telles que le noir de carbone,
- et éventuellement des charges non conductrices.

Dans la présente invention, on entend par "alliage de polymères compatibles" un mélange d'au moins deux polymères qui sont non miscibles mais qui sont compatibles ou un mélange d'au moins deux polymères non miscibles et non compatibles mais rendus compatibles par l'addition d'un agent de compatibilisation. La mise en oeuvre d'un tel alliage de polymères compatibles par extrusion permet d'obtenir une structure composite.

Selon l'invention, la polyoléfine polaire entrant dans la composition de l'alliage à comportement CTP est très peu cristalline. De préférence il s'agit d'un élastomère et elle est choisie parmi les copolymères d'éthylène/acétate de vinyle, éthylène/acrylate d'alkyle en C₁-C₄, ou leurs mélanges. Plus préférentiellement on utilise un copolymère d'éthylène/acrylate d'éthyle ou éthylène/acrylate de méthyle.

Le polymère de matrice de l'alliage à comportement CTP est choisi parmi les poly(alkylène en C₁-C₄) téréphthalates, et les polycétones aliphatiques, les polyamides, les polycarbonates, les copolymères de polyester et de polyéther ou leurs mélanges. Lorsque ce polymère est un poly(alkylène en C₁-C₄) téréphtalate, on préfère utiliser le polybutylènetéréphtalate ou le polyéthylènetéréphtalate. On préfère le polybutylènetéréphtalate. A titre d'exemple de polycétone aliphatique, on peut citer celle commercialisée par les sociétés SHELL sous la marque CARILLON® et BP sous la marque KETONEX®.

Ce polymère de matrice a une température de fusion élevée, cette température de fusion déterminant la température maximale d'utilisation du câble selon l'invention.

Le polymère est généralement cristallin à l'exception du polyéthylènetéréphtalate, qui peut être utilisé dans la présente invention sous forme cristalline ou amorphe.

L'alliage à comportement CTP peut incorporer différents additifs, par exemple des agents antioxydants et des charges non conductrices.

Le choix des additifs sera bien entendu fonction de l'utilisation finale envisagée pour le câble auto-régulant selon l'invention.

Pour des raisons de coût, la charge conductrice est de préférence le noir de carbone. Bien entendu toute autre charge électrique peut être utilisée seule ou en mélange notamment avec le noir de carbone.

Le câble auto-régulant selon l'invention présente un excellent rapport de l'intensité de courant de démarrage sur l'intensité de courant nominal et une excellente puissance linéique ainsi que des caractéristiques de vieillissement tout à fait satisfaisantes.

De préférence, les câbles auto-régulants selon l'invention présentent les caractéristiques suivantes :
- rapport de l'intensité du courant de démarrage sur l'intensité du courant nominal à 10°C, inférieur à 3 de préférence inférieur à 2, et plus préférentiellement encore inférieur à 1,5 ; et
- puissance linéique à 10°C comprise entre 5 W/m et 130 W/m mesurée selon la norme DIN VDE 0254.

La présente invention porte également sur un procédé caractérisé par le fait qu'il comprend les étapes suivantes dans lesquelles :
- on mélange les différents constituants de l'alliage à comportement CTP décrit ci-dessus,
- on extrude le mélange ainsi obtenu sous forme de granulats,
- on extrude ensuite lesdits granulats autour de torons électriquement conducteurs sans avoir recours ni à une étape de réticulation ni à une étape de traitement thermique,
- on recouvre le ruban ainsi formé d'un matériau électriquement isolant,
- puis on insère l'ensemble dans un manchon métallique protecteur,
- et enfin on entoure le manchon d'une gaine isolante.

Ces câbles sont donc réalisés sans réticulation ni traitement thermique, par extrusion de l'alliage à comportement CTP autour de câbles conducteurs.

La présente invention va maintenant être décrite plus en détail avec références aux dessins annexés, sur lesquels :
- la figure 1 représente une vue éclatée d'un câble auto-régulant conforme à l'invention,
- la figure 2 représente les courbes de la puissance linéique en fonction de la température d'un câble auto-régulant selon l'invention et d'un câble auto-régulant de l'art antérieur,
- les figures 3 et 4 représentent des photographies en microscopie électronique montrant la structure composite du matériau d'un alliage de polymères compatibles utilisé dans un câble CTP selon l'invention, après extraction de l'oléfine polaire, à des grossissements respectivement de 1250 et 640.

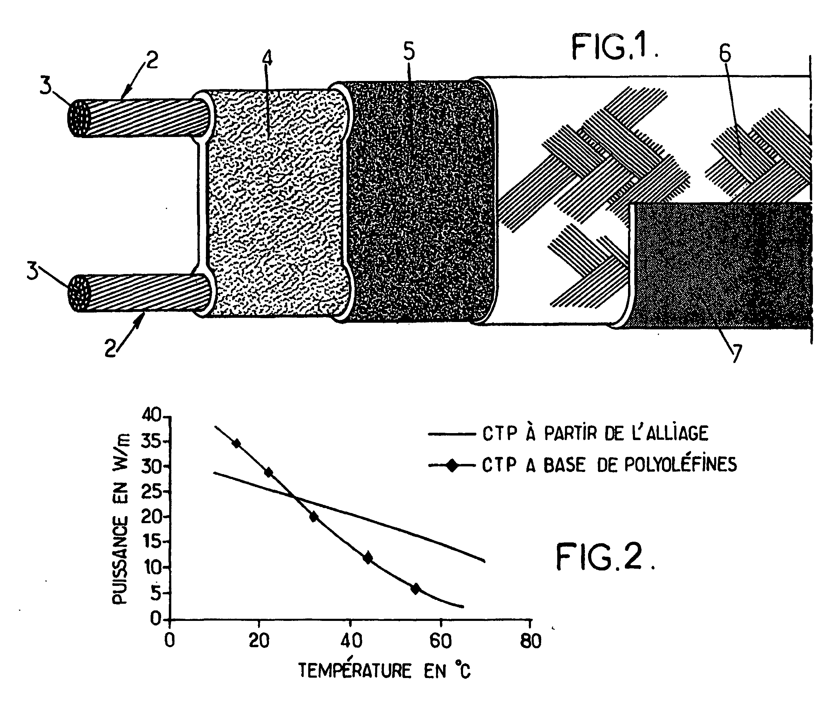

Sur la figure 1, le câble auto-régulant 1 selon l'invention est constitué de deux torons 2 de fils 3 de cuivre nickelé. Ces torons sont parallèles entre eux et disposés longitudinalement dans le câble 1 le long des deux bords opposés de celui-ci. Ces torons sont maintenus en position par extrusion autour de ceux-ci d'un ruban 4 en alliage de polymères compatibles à comportement CTP tel que décrit ci-dessus. Autour de ce ruban 4 est extrudé une couche 5 de matériau isolant, tel que polypropylène ignifugé ou éthylène chlorotrifluoroéthylène. Un manchon 6 constitué par une tresse métallique est disposé autour de la couche 5 de matériau isolant. L'ensemble est protégé par une gaine externe isolante 7.

### Exemple 1 :

### Préparation d'un alliage de polymères compatibles selon l'invention pour un câble auto-régulant

On mélange dans une extrudeuse 60% de polybutylènetéréphtalate de marque VESTODUR® 3000 fabriqué par la Société HÜLS, 20% de copolymère éthylène/acrylate de méthyle de type 24 MA005 fabriqué par la Société ELF ATOCHEM et 20% de copolymère éthylène/acrylate d'éthyle chargé de 37% de noir de carbone vendu sous la marque LE7704® par la Société BOREALIS.

Le mélange comprend donc environ 8% en poids de noir de carbone.

On extrude ce mélange à 260°C. On obtient alors des granulés que l'on extrude à nouveau en la forme d'un ruban plat comprenant en ses deux bords parallèles des torons de cuivre afin de réaliser un ruban auto-régulant 4 selon la figure 1.

Aucune réticulation, ni aucun traitement thermique supplémentaire ne sont nécessaires.

Le ruban 4 ainsi obtenu présente les caractéristiques suivantes :
- épaisseur: 1,7 mm
- largeur: 8,2 mm
- rapport de l'intensité du courant de démarrage sur l'intensité du courant nominal, à 10°C : 1,4.

La courbe de la puissance linéique en fonction de la température est représentée sur la figure 2.

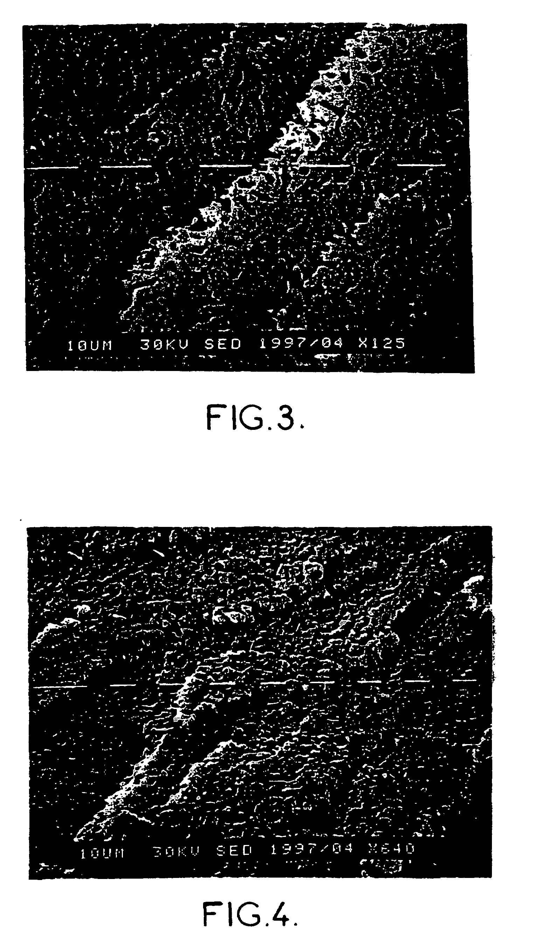

On extrait alors les copolymères et on photographie au microscope électronique la structure du matériau résultant. Les photographies sont données sur les figures 3 et 4.

### Exemple 2 (comparatif) :

### Câbles auto-régulants de type polyoléfines

Un mélange de polyéthylène-éthylène/acrylate d'éthyle 60/40 a été extrudé autour de deux torons de fils de cuivre puis a été réticulé.

Le ruban ainsi obtenu présente les caractéristiques suivantes :
- épaisseur: 1,45mm
- largeur: 8,2mm
- rapport de l'intensité de courant de démarrage sur l'intensité du courant nominal à 10°C : 3,3

La courbe de la puissance linéique en fonction de la température est représentée sur la figure 2.

## Revendications

1. Câble auto-régulant comprenant un matériau à comportement CTP (CTP = Coefficient à Température Positif) qui est un alliage extrudable de polymères compatibles comprenant, les pourcentages étant exprimés en poids par rapport au poids desdits polymères :
- de 20 à 50% d'au moins une polyoléfine polaire,
- de 50 à 80% d'au moins un polymère de matrice choisi parmi les poly(alkylène en C₁-C₄)téréphtalates, les polyamides, les polycarbonates, les copolymères de polyester et de polyéther, les polycétones et les polyméthacrylates de méthyle, ou leurs mélanges,
- de 5 à 15%, de préférence de 5 à 10% de charges conductrices telles que le noir de carbone, et,
- éventuellement des charges non conductrices.

2. Câble auto-régulant selon la revendication 1, **caractérisé par le fait que** la polyoléfine polaire est choisie parmi les copolymères éthylène/acétate de vinyle, éthylène/acrylate d'alkyle en C₁-C₄, ou leurs mélanges, de préférence éthylène/acrylate d'éthyle ou éthylène/acrylate de méthyle.

3. Câble auto-régulant selon l'une ou l'autre des revendications 1 et 2, **caractérisé par le fait que** le polymère de matrice est cristallin et est de préférence le polybutylènetéréphtalate

4. Câble auto-régulant selon l'une quelconque des revendications 1 à 3, **caractérisé par le fait que** l'alliage comprend au moins un agent stabilisant.

5. Câble auto-régulant selon l'une quelconque des revendications 1 à 4, **caractérisé par le fait qu'**il présente:
- un rapport de l'intensité de démarrage sur l'intensité de courant maximal, à 10°C, inférieur à 3, de préférence inférieur à 2, et plus préférentiellement encore inférieur à 1,5,
- et une puissance linéique à 10°C comprise entre 5 W/m et 130 W/m mesurée selon la norme DIN VDE 0254.

6. Procédé de fabrication d'un câble auto-régulant selon l'une quelconque des revendications 1 à 5, comprenant les étapes suivantes dans lesquelles :
- on mélange les différents composants de l'alliage à comportement CTP,
- on extrude le mélange ainsi obtenu afin d'obtenir des granulats,
- on extrude les granulats autour de torons électriquement conducteurs sans avoir recours ni à une étape de réticulation ni à une étape de traitement thermique,
- on recouvre ensuite le ruban ainsi formé d'un matériau électriquement isolant
- puis on insère l'ensemble dans un manchon métallique protecteur,
- enfin on entoure le manchon d'une gaine isolante.

## Patentansprüche

1. Selbstregulierendes Kabel, umfassend ein Material mit PTC-Verhalten (PTC = positiver Temperaturkoeffizient), das eine extrudierbare Legierung kompatibler Polymere ist, welche folgendes umfasst, wobei es sich bei den Prozentangaben um Gewichtsprozent, bezogen auf das Gewicht der Polymere, handelt:
- 20 bis 50% mindestens eines polaren Polyolefins,
- 50 bis 80% mindestens eines Matrixpolymers, das aus den Poly-(C₁-C₄-alkylen)terephthalaten, Polyamiden, Polycarbonaten, Copolymeren von Polyester und Polyether, Polyketonen und Methylpolymethacrylaten oder Gemischen davon ausgewählt ist,
- 5 bis 15%, vorzugsweise 5 bis 10%, leitfähige Füllstoffe, wie Rußschwarz, und
- gegebenenfalls nicht leitfähige Füllstoffe.

2. Selbstregulierendes Kabel nach Anspruch 1, **dadurch gekennzeichnet, dass** das polare Polyolefin aus den Ethylen/Vinylacetat-, Ethylen/C₁-C₄-Alkylacrylat-Copolymeren oder Gemischen davon, vorzugsweise aus Ethylen/Ethylacrylat- oder Ethylen/Methylacrylat-Copolymeren ausgewählt ist.

3. Selbstregulierendes Kabel nach dem einem oder anderen der Ansprüche 1 und 2, **dadurch gekennzeichnet, dass** das Matrixpolymer kristallin ist und es sich vorzugsweise um Polybutylenterephthalat handelt.

4. Selbstregulierendes Kabel nach einem der Ansprüche 1 bis 3, **dadurch gekennzeichnet, dass** die Legierung mindestens ein Stabilisierungsmittel umfasst.

5. Selbstregulierendes Kabel nach einem der Ansprüche 1 bis 4, **dadurch gekennzeichnet, dass** es folgendes aufweist:
- ein Verhältnis der Anlaufstromstärke zur maximalen Stromstärke bei 10°C von weniger als 3, vorzugsweise weniger als 2 und am stärksten bevorzugt zudem weniger als 1,5,
- und eine lineare Leistung bei 10°C zwischen 5 W/m und 130 W/m, gemessen gemäß der Norm DIN VDE 0254.

6. Verfahren zur Herstellung eines selbstregulierenden Kabels nach einem der Ansprüche 1 bis 5, welches die folgenden Schritte umfasst:
- Mischen der verschiedenen Bestandteile der Legierung mit PTC-Verhalten, um ein Gemisch zu erhalten,
- Extrudieren des so erhaltenen Gemisches, um Granulate zu erhalten,
- Extrudieren der Granulate um elektrisch leitfähige Litzen herum, wobei man weder einen Vernetzungsarbeitsgang noch eine thermische Behandlung durchführen muss,
- anschließendes Überziehen des so hergestellten Bandes mit einem elektrisch isolierenden Material,
- anschließendes Einfügen der Gesamtheit in eine metallische Schutzhülle,
- abschließendes Umhüllen der Schutzhülle mit einer Schutzisolierung.

## Claims

1. Self-adjusting cable comprising a material having PTC behavior (PTC = Positive Temperature Coefficient), which is an extrudable alloy of compatible polymers comprising, expressed in percentages by weight with respect to the weight of said polymers :
from 20% to 50% at least one polar polyolefin,
from 50% to 80% of at least one matrix polymer chosen from poly (C₁-C₄-alkylene) terephtalates, polyamides, polycarbonates, polyester and polyether copolymers, polyketones and methyl polymethacrylates or mixtures thereof,
from 5% to 15%, preferably from 5 to 10% of conductive fillers, such as carbon black, and,
optionally, non conductive fillers.

2. Self-adjusting cable according to claim 1, **characterized in that** the polar polyolefin is chosen from ethylene/vinyl acetate copolymers, ethylene/C₁-C₄ alkyl acrylate copolymers or mixtures thereof, preferably from ethylene/ethyl acrylate or ethylene/methyl acrylate copolymers.

3. Self-adjusting cable according to anyone of claims 1 and 2, **characterized in that** the matrix polymer is crystalline, and is preferably polybutylene terephthalate.

4. Self-adjusting cable according to anyone of claims 1 to 3, **characterized in that** the alloy further comprises at least one stablizer.

5. Self-adjusting cable according to anyone of claims 1 to 4, **characterized in that** it presents :
- a ratio of starting current intensity to maximum current intensity, at 10°C, of less than 3, preferably less than 2, and even more preferably less than 1,5, and
- a linear power at 10°C between 5 W/m and 130 W/m measured according to the standard DIN VDE 0254.

6. A process for the production of a self-adjusting cable according to anyone of claims 1 to 5, comprising the following steps wherein :
various components of an alloy having PTC behavior are mixed to obtain a mixture,
the mixture thus obtained is extruded to obtain granular products,
the granular products are extruded around electrically conductive strands without the use of either a crosslinking or heat treatment step,
the strip thus formed is then covered with an electrically insulating material,
then the whole assembly is inserted in a protective metal sleeve,
finally the sleeve is surrounded by an insulating sheath.
